# EUROPÄISCHE PATENTSCHRIFT

(11) **EP 0 447 820 B1**
(45) Veröffentlichungstag und Bekanntmachung des Hinweises auf die Patenterteilung: **20.04.1994**
(21) Anmeldenummer: 91102395.0
(22) Anmeldetag: 20.02.1991
(51) Int. Cl.: B21F 19/00, B21C 37/04

(54) **Verfahren zur Herstellung eines metallischen Verbunddrahtes**
Method of making a composite metal wire
Procédé de fabrication d'un fil composite métallique

(30) Priorität: 23.03.1990 DE 4009366
(43) Veröffentlichungstag der Anmeldung: 25.09.1991
(73) Patentinhaber: W.C. Heraeus GmbH, D-63405 Hanau (DE)
(72) Erfinder: Keilberth, Richard, W-8761 Weilbach (DE); Lupton, David Francis, Dr., W-6460 Gelnhausen (DE)

(56) Entgegenhaltungen:
- DE-C- 3 832 342
- FR-A- 1 210 903
- FR-A- 2 417 274
- GB-A- 983 023
- PATENT ABSTRACTS OF JAPAN vol. 10, no. 375 (M-545)(2432)& JP-A-61 169 114 (HITACHI CABLE LTD) 30 Juli 1986
- PATENT ABSTRACTS OF JAPAN vol. 11, no. 225 (M-609)(2672)22. Juli 1987 & JP-A-62 040 944 ( HITACHI CABLE LTD. ) 21. Februar 1987
- PATENT ABSTRACTS OF JAPAN vol. 12, no. 82 (C-481)(2929)15. März 1988 & JP-A-62 214 165 ( HITACHI CABLE LTD. ) 19. September 1987
- PATENT ABSTRACTS OF JAPAN vol. 3, no. 83 (C-52)18. Juli1979 & JP-A-54 062 157 ( FUJIKURA DENSEN K.K. ) 18. Mai 1979
- PATENT ABSTRACTS OF JAPAN vol. 14, no. 209 (M-968)(4152)27. April 1990 & JP-A-2 046 939 ( SUMITOMO METAL IND. LTD. ) 16. Februar 1990
- PATENT ABSTRACTS OF JAPAN vol. 13, no. 48 (M-793)(3396)3 Februar 1989 & JP-A-63 256 218 (TANAKA KIKINZOKU KOGYO K.K.) 24 October 1988

## Beschreibung

Die Erfindung bezieht sich auf ein Verfahren zur Herstellung eines metallischen Verbunddrahtes mit einem Kern aus hartem Werkstoff und einem Mantel aus weichem Werkstoff, wobei ein Stab aus Kern-Werkstoff in ein Rohr aus Mantel-Werkstoff gesteckt und diese Stab-Rohr-Anordnung in ihrem Querschnitt durch Ziehen auf ein vorgegebenes Maß vermindert wird (siehe z.B. FR-A-1 210 903).

Ein derartiges Verfahren ist aus der US-PS 3,848,319 bekannt. Es wird benutzt, um sehr dünne Drähte aus Edelmetall oder einer Edelmetall-Legierung herzustellen. Dabei wird jedoch der Mantelwerkstoff nach dem Ziehen chemisch weggeätzt. Als Kern-Werkstoff dient reines Gold, als Mantel-Werkstoff Kupfer. Bei diesem bekannten Verfahren werden Glühschritte vermieden, um eine Diffusion von Gold in Kupfer oder umgekehrt zu vermeiden.

Aus dem US-Patent 4,291,644 ist weiterhin ein Verfahren zur Herstellung eines Verbunddrahtes bekannt, bei dem ein harter Kern-Werkstoff mit einem weichen Mantel-Werkstoff durch Extrudieren versehen wird, wobei der Kern durch direkten Stromdurchgang erhitzt und unter konstanter Zugspannung gehalten wird, die bin zu 50 % der Zugfestigkeit des Kern-Werkstoffes beträgt. Als Kern-Werkstoff wird beispielsweise Stahl, als Mantel-Werkstoff Aluminium verwendet.

Aufgabe der vorliegenden Erfindung ist es, ein kostengünstiges Verfahren zur Herstellung quasi-endloser Längen eines metallischen Verbunddrahtes mit hartem, schwer verformbarem Kern-Werkstoff und weichem Mantel-Werkstoff bereitzustellen, mit dem Ziel der Bewahrung einer guten Rundheit des Drahtes und der Sicherstellung von Gleichmäßigkeit und Mittigkeit des Kerns.

Gelöst wird diese Aufgabe für das eingangs charakterisierte Verfahren erfindungsgemäß dadurch, daß aus der Stab-Rohr-Anordnung in einem ersten Schritt durch Warmwalzen und anschließendes Ziehen ein auf ein Zwischenmaß gebrachter Zweierverbund hergestellt wird, wobei der Ausgangsquerschnitt der Stab-Rohr-Anordnung einer Querschnittsverminderung von wenigstens 50 % unterworfen wird, daß dann ein Dreierverbund durch Aufziehen eines weiteren Rohres aus Mantel-Werkstoff auf den Zweierverbund hergestellt und danach der Dreierverbund warm- oder kaltgewalzt und anschließend kalt auf Endmaß gezogen wird.

Drähte, die erfindungsgemäß hergestellt werden, haben den Vorteil, daß durch die Anbringung des zweiten Mantels die Gefahren von Unterbrechungen, Poren oder Rissen im Mantel praktisch vermieden werden, so daß eine hohe Sicherheit an Produktqualität gegeben ist. Verbunddrähte mit einem Mantel-Werkstoff aus Platin und einem Kern-Werkstoff aus einer Platin-Legierung, die aus 25 Gew.-% Iridium, Rest Platin, besteht, und deren Außendurchmesser 0,3 mm und der Kern-Durchmesser 0,1 mm beträgt, konnten in Längen von etwa 50 m hergestellt werden. Durch den (die) Warmwalzschritt(e) des Verfahrens wird ein guter haftfester Verbund zwischen Kern- und Mantel-Werkstoff sichergestellt; ein Abplatzen des Mantels vom Kern, auch nur stellenweise, ist dadurch sicher vermieden.

Bewährt hat es sich beim erfindungsgemäßen Verfahren, den Dreierverbund mehrstufig auf Endmaß kalt zu ziehen. Dies hat den Vorteil, daß die Querschnittsverminderung in mehreren kleineren Stufen erfolgt und nicht in einer einzigen Stufe, wodurch ein Zerreißen des Kerns vermieden wird.

Besonders kostengünstig gestaltet sich das erfindungsgemäße Verfahren, wenn als weiteres Rohr ein solches verwendet wird, welches die gleichen Abmessungen besitzt wie das zur Herstellung des Zweierverbundes verwendete Rohr. Dann ist die Vorratshaltung der Rohre sehr einfach, weil nur eine einzige Sorte von Rohren gleicher Abmessungen auf Lager gehalten werden muß. Mit dem erfindungsgemäßen Verfahren lassen sich insbesondere solche Verbunddrähte herstellen, bei denen die Wandstärke des Mantels im Bereich von 15 bis 40 % des Drahtdurchmessers beträgt.

Wie bereits erwähnt, eignet sich das erfindungsgemäße Verfahren besonders zur Herstellung von Verbunddrähten mit einem Mantel-Werkstoff aus Platin und einem Kern-Werkstoff aus einer Platin-Iridium-Legierung, insbesondere einer Legierung, die aus 25 Gew.-% Iridium, Rest Platin besteht. Erfindungsgemäß hergestellte Verbunddrahtstücke mit Platin-Mantel und Platin-Iridium 25 -Kern werden nach ihrer Aktivierung in einem Kernreaktor beispielsweise als Einlagen zum Bestrahlen von Tumorgewebe verwendet.

Nachfolgend wird ein Beispiel für die Durchführung des erfindungsgemäßen Verfahrens angegeben.

Ausgangsmaterial bildet ein Rundstab aus Platin-Iridium 25 mit einem Außendurchmesser von 1,78 mm sowie ein Platin-Rohr mit einem Außendurchmesser von 3,1 mm und einem Innendurchmesser von 1,8 mm. Der Rundstab und das Rohr hatten eine Länge von je 250 mm. Der Rundstab dient als Kern-Werkstoff, das Rohr als Mantel-Werkstoff. Das Rohr wird zunächst auf den Stab aufgezogen, in dem die Stab-Rohr-Anordnung bei Raumtemperatur durch einen Hartmetallziehstein an einen Durchmeser von 3,08 gezogen wird. Danach wird die Stab-Rohr-Anordnung an ein Maß von 1,8 mm warm gewalzt. Die Temperatur beträgt dabei 950 °C, das Walzprofil entspricht einem 8-Kant. Anschließend wird das warmgewalzte Zwischenprodukt kalt rundgezogen auf einen Durchmesser von 1,78 mm. Auf diesen Zweierverbund wird nun wieder ein Platin-Rohr mit gleichen Durchmesserabmessungen wie das Ausgangsrohr jedoch mit einer Länge von 750 mm aufgezogen. Der so gewonnene Dreierverbund wird kaltgewalzt an ein Maß von 1,0 mm und schließlich mit Diamantziehsteinen auf einer Mehrfachziehmaschine an einem Durchmesser von 0,3 mm kalt in mehreren Stufen gezogen mit einer Querschnittsabnahme von 12 % pro Zug. Aus einem Stab und den beiden Rohren mit den angegebenen Abmessungen und einer Länge von 250 mm konnte ein Verbunddraht von 0,3 mm Durchmesser und einer Länge von 70 m hergestellt werden.

## Patentansprüche

1. Verfahren zur Herstellung eines metallischen Verbunddrahtes mit einem Kern aus hartem Werkstoff und einem Mantel aus weichem Werkstoff, wobei ein Stab aus Kern-Werkstoff in ein Rohr aus Mantel-Werkstoff gesteckt und diese Stab-Rohr-Anordnung in ihrem Querschnitt durch Ziehen auf ein vorgegebenes Endmaß vermindert wird, dadurch gekennzeichnet, daß aus der Stab-Rohr-Anordnung in einem ersten Schritt durch Warmwalzen und anschließendes Ziehen ein auf ein Zwischenmaß gebrachter Zweierverbund hergestellt wird, wobei der Ausgangsquerschnitt der Stab-Rohr-Anordnung einer Querschnittsverminderung von wenigstens 50 % unterworfen wird, daß dann ein Dreierverbund durch Aufziehen eines weiteren Rohres aus Mantel-Werkstoff auf den Zweierverbund hergestellt und danach der Dreierverbund warm- oder kaltgewalzt und anschließend kalt auf Endmaß gezogen wird.

2. Verfahren nach Anspruch 1, dadurch gekennzeichnet, daß der Dreierverbund mehrstufig auf Endmaß kalt gezogen wird.

3. Verfahren nach Anspruch 1, dadurch gekennzeichnet, daß als weiteres Rohr ein solches verwendet wird, welches die gleichen Durchmesser-Abmessungen besitzt, wie das zur Herstellung des Zweierverbundes verwendete Rohr.

4. Verfahren nach einem der Ansprüche 1 bis 3, dadurch gekennzeichnt, daß der Dreierverbund auf ein solches Endmaß gezogen wird, bei dem die Wandstärke des Mantels im Bereich 15 bis 40 % des Drahtdurchmessers beträgt.

5. Verfahren nach wenigstens einem der Ansprüche 1 bis 4, dadurch gekennzeichnet, daß als Kern-Werkstoff eine Platin-Iridium-Legierung und als Mantel-Werkstoff Platin verwendet wird.

6. Verfahren nach Anspruch 5, dadurch gekennzeichnet, daß als Kern-Werkstoff eine Platin Legierung verwendet wird, die 25-Gew.% Iridium enthält.

## Claims

1. A method for the production of a metallic composite wire with a core of hard material and a sheath of soft material, in which a rod of core material is inserted into a tube of sheathing material and this rod/tube arrangement is reduced in its cross-section by drawing to a predetermined final dimension, characterised in that from the rod/tube arrangement in a first step, by hot-rolling and subsequent drawing, a double composite is produced, which is brought to an intermediate dimension, in which the initial cross-section of the rod/tube arrangement is subjected to a reduction in cross-section of at least 50 %, that then a triple composite is produced by the drawing of a further tube of sheathing material onto the double composite and thereafter the triple composite is hot- or cold-rolled and is then cold-drawn to its final dimension.

2. A method according to Claim 1, characterised in that the triple composite is cold-drawn to its final dimension in several stages.

3. A method according to Claim 1, characterised in that as further tube, a tube is used which has the same diameter dimensions as the tube used for the production of the double composite.

4. A method according to one of Claims 1 to 3, characterised in that the triple composite is drawn to a final dimension in which the wall thickness of the sheath is in the range of 15 to 40 % of the diameter of the wire.

5. A method according to at least one of Claims 1 to 4, characterised in that a platinum/iridium alloy is used as core material and platinum is used as sheathing material.

6. A method according to Claim 5, characterised in that a platinum alloy is used as core material, which contains 25 % iridium by weight.

## Revendications

1. Procédé de fabrication d'un fil composite métallique comportant un noyau en matériau dur et une enveloppe en matériau souple, une barre en matériau de noyau étant enfilée dans un tube en matériau d'enveloppe et cet agencement barre-tube étant réduit dans sa section du fait qu'il est tréfilé à une dimension finale prédéterminée, caractérisé en ce qu'à partir de l'agencement barre-tube, est fabriqué dans une première étape, par laminage à chaud et par tréfilage consécutif, un composite double amené à une dimension intermédiaire, la section initiale de l'agencement barre-tube étant soumise à une réduction de section d'au moins 50 %, en ce qu'un composite triple est fabriqué en enfilant un autre tube en matériau d'enveloppe sur le composite double et en laminant ensuite le composite triple à chaud ou à froid pour le tréfiler finalement à froid à la dimension finale.

2. Procédé selon la revendication 1, caractérisé en ce que le composite triple est tréfilé à froid en plusieurs étapes à la dimension finale.

3. Procédé selon la revendication 1, caractérisé en ce que l'autre tube utilisé possède les mêmes dimensions de diamètre que le tube utilisé pour la fabrication du composite double.

4. Procédé selon l'une des revendications 1 à 3, caractérisé en ce que le composite triple est tréfilé à une dimension finale telle que l'épaisseur de la paroi de l'enveloppe est dans une plage de 15 à 40 % du diamètre du fil.

5. Procédé selon au moins l'une des revendications 1 à 4, caractérisé en ce que le matériau de noyau est un alliage platine-iridium et que le matériau d'enveloppe utilisé est du platine.

6. Procédé selon la revendication 5, caractérisé en ce que le matériau de noyau utilisé est un alliage de platine qui contient 25 % en poids d'iridium.
